# EUROPEAN PATENT SPECIFICATION

(11) **EP 1 178 227 B1**
(45) Date of publication and mention of the grant of the patent: **07.12.2005**
(21) Application number: 01306476.1
(22) Date of filing: 27.07.2001
(51) Int. Cl.: F16B 45/02

(54) **Karabiners**
Karabinerhaken
Mousquetons

(30) Priority: 04.08.2000 GB 0019136
(43) Date of publication of application: 06.02.2002
(60) Divisional application: 05077237.5
(73) Proprietor: DMM Engineering Limited, Llanberis, Gwynedd, LL55 4EL (GB)
(72) Inventor: Carnall, Mark, Bedminster, Bristol BS3 1JH (GB)
(74) Representative: Lyons, Andrew John

(56) References cited:
- DE-A- 19 539 587
- DE-A- 19 732 204
- FR-A- 2 766 884
- GB-A- 599 471
- GB-A- 2 077 838
- US-A- 5 791 025
- US-A- 5 913 479

## Description

This invention concerns snap hooks, also known as karabiners, for use in climbing and other activities requiring connections to be made to ropes, cables and carrying loops for equipment.

Karabiners generally comprise a C-shaped body with its ends curved towards each other and forming a gap closed by a spring loaded gate pivotally mounted on one body end and urged into engagement with the other body end. A thimble or other locking member may be provided either on the gate or the free body end and which is movable, say slidably or along screw threading, to lock the gate in a closed position.

When unlocked, the gate of a karabiner is urged closed and a rope or loop can be snapped into the karabiner by pushing it against the gate to open it. Once the rope or loop is in the confines of the C-shaped body, the gate can spring back to its closed position, where it can be locked, if desired.

FR-A-2766884 discloses a karabiner comprising a generally C-shaped body with its free ends curved towards each other and forming a gap therebetween, and a gate for closing the gap, the gate being formed of a wire member shaped and located on one free end of the body, such that it is constrained to close the gap and the other end of the body having a transverse slot for receiving an end of the gate.

DE-A-19539587 discloses a wire karabiner.

GB-A-2077838 discloses a karabiner comprising a generally C-shaped body with its free ends curved towards each other and forming a gap therebetween, and a spring-biased gate for closing the gap located on one free end of the body and means for locking the gate in a closed position.

GB-A-599471 discloses a safety hook comprising a curved body with free ends facing each, a gate on one free end closable against the other free end and means for locking the gate in a closed position.

There are a number of problems associated with currently available karabiners, such as, the number of components required particularly in providing a spring-loaded gate and in the gate or body having a hooked end on which ropes or other items can snag.

An object of this invention is to provide an improved karabiner.

According to a first aspect of this invention there is provided a karabiner comprising a generally C-shaped body with its free ends curved towards each other and forming a gap therebetween, a gate for closing the gap pivotally located on a first free end of the body, the gate being formed of a wire member and having a shaped end located at the free end thereof, the second free end of the body having a slot therein for receiving the shaped free end of the gate, characterised in that the slot comprises from the second free end a first narrow part for receiving the wire member leading to a second wider part for receiving the shaped end of the gate.

The gate is preferably formed by a wire that is bent double and has its free ends further bent inwards towards each other to locate in a different hole on opposite sides of the first free end of the body, one hole being above the other. From their locations in the first free end of the body, the two strands of the wire are bent towards each other to approximately a mid-point of the gate until they overlap in a plane of the body.

At its free end the gate may be shaped by folding or bending of the wire to form a shaped end. For example, the shaped end of the gate may be bent over sideways from the plane of the body or the loop at the end of the gate enlarged. An alternative may be to use the loop formed where the wire is bent double to capture a shaped nut that can locate in the slot of the second free end of the body. Yet again, the nut may be shaped to be slid onto the gate.

Between the wide and narrow parts of the slot a ledge may be provided. The ledge is preferably in a plane substantially normal to a longitudinal axis of the gate when the gate closes the gap. Thus, when forces are applied to opposite ends of the karabiner, the ends of the body will tend to bend inwards even only to a slight extent which will cause the ledge to be angled upwardly relative to the gate and thus help to retain the shaped end of the gate in the slot of the free end of the body.

The gate or the second free end of the body may carry additional locking means for when the gate is closed. In one preferred embodiment a thimble may be provided on the gate that can be moved up the gate to overlap at least partially the second free end of the body. Conveniently an outwardly screw threaded sleeve may be provided on the gate and an internally screw threaded thimble be provided on the sleeve.

In another preferred embodiment a locking ring may be mounted rotatably on the second free end of the body, the ring having a slot therein, whereby in one position the gate can pass through the slot of the ring for its shaped end to locate in the slot of the second free end of the body and then by rotating the ring, the slot therein is no longer accessible to the gate.

In yet another preferred embodiment, the gate may be provided with a slidable locking member that, for example, can be slid upwards when the gate closes the gap, the locking member having a finger or the like that extends over the opposite side of the body to that of the slot opening to prevent the gate being pushed open.

Another preferred embodiment provides a locking pin that can be inserted through the second free end of the body of the karabiner and into or through the free end of the gate to prevent it being pushed open. The locking pin can be on a flexible or spring-biased tab attached to the gate. Alternatively, the pin can be rotatably mounted in the slot of the second free end of the body between a first position wherein a lip on the end of the pin can pass through a loop of the wire gate and a second position wherein the lip retains the loop of the gate in the slot. The slot of the second free end of the body preferably faces inwards i.e. towards the body of the karabiner. In yet other embodiments the slot may be shaped with a part that interengages with the wire gate, especially through a loop thereof.

The locking means may be a slidable locking member that, for example, can be slid upwards on the gate and that has a finger or the like to extend over the opposite side of the body to that of the direction of opening of the gate. Alternatively a locking pin may be provided on a flexible or spring-biased tab attached to the gate, which pin can be inserted through a hole in the free end of the karabiner body and into a hole or slot of the gate when closed.

This invention will now be further described, by way of example only, with reference to the accompanying drawings, in which:
Figure 1 is a side view of a karabiner of the invention closed;
Figure 2 is a top plan view of the karabiner of Figure 1;
Figure 3 is a front view of the karabiner of Figure 1;
Figure 4 is a section on line AA of Figure 3;
Figure 5 is a perspective view from one side and the front of the karabiner of Figure 1;
Figure 6 is a perspective view from the rear and opposite sides of the karabiner of Figure 1;
Figures 7 to 12 are corresponding views to those of Figures 1 to 6 respectively but with the karabiner open and the section line of Figure 9 marked as BB;
Figures 13 and 14 are perspective and front views of the gate receiving free end of the karabiner of Figures 1 to 12;
Figures 15 and 16 are corresponding views to those of Figures 13 and 14 respectively with the karabiner gate closed;
Figure 17 is a section on line CC of Figure 16; and
Figures 18 to 28 show variations on the karabiner of Figure 1.

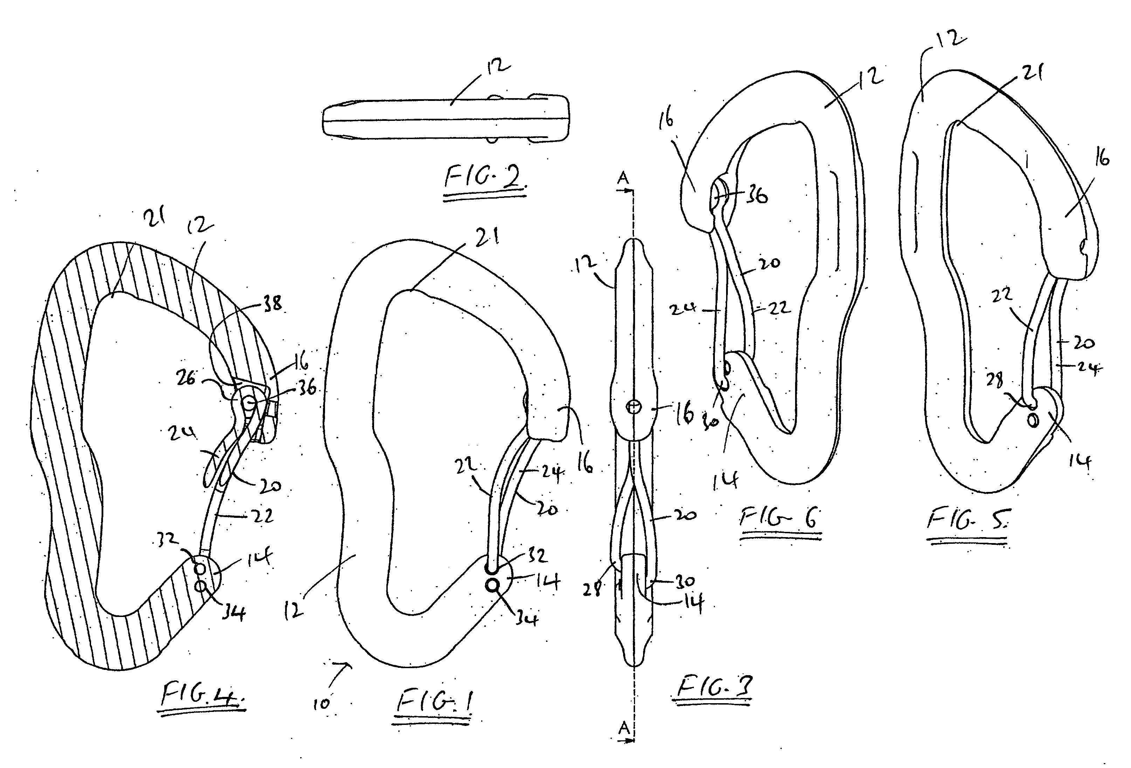

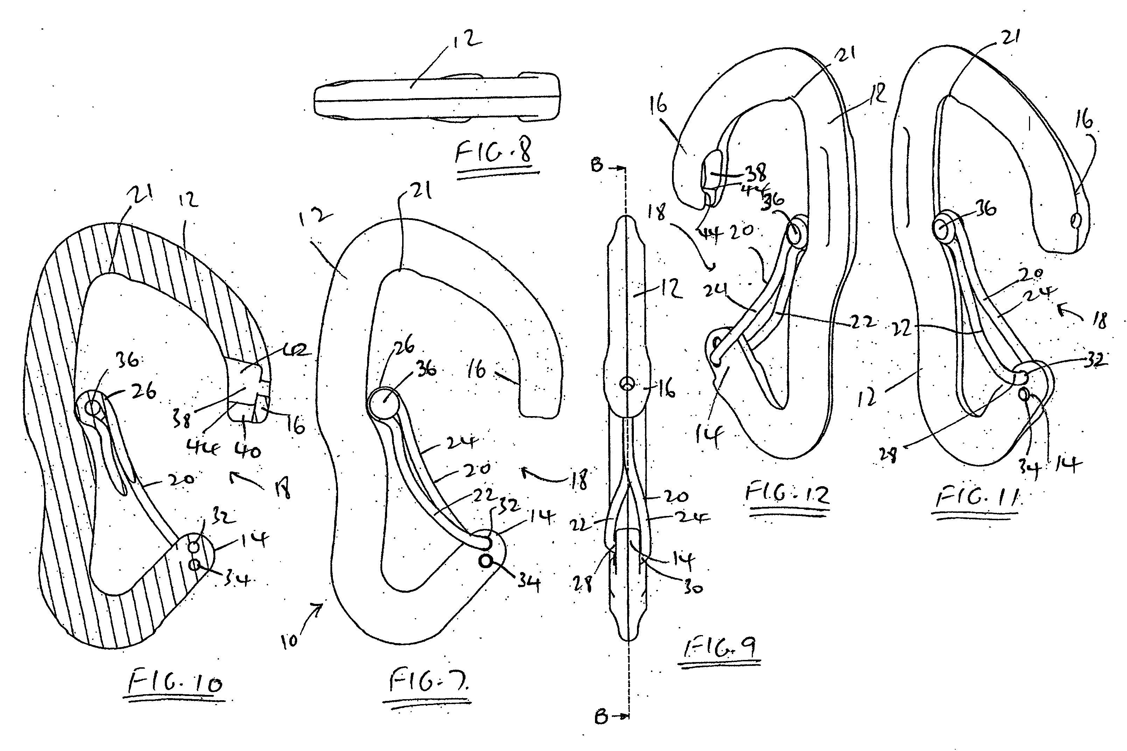

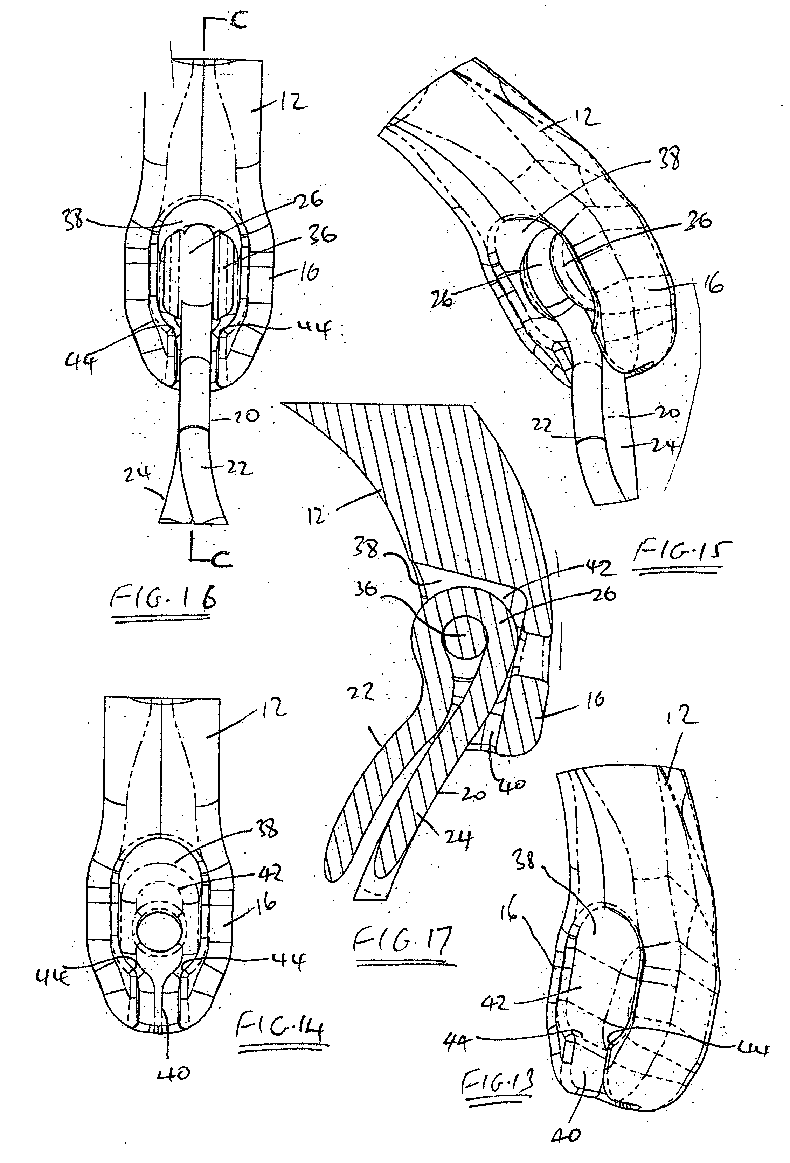

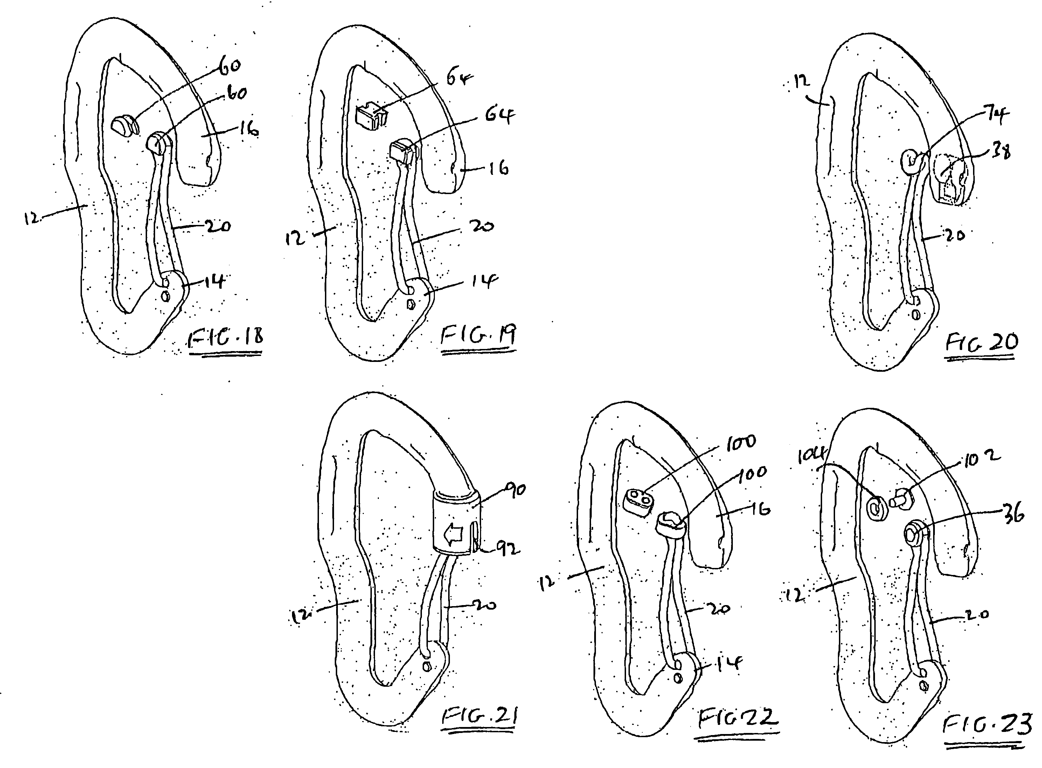

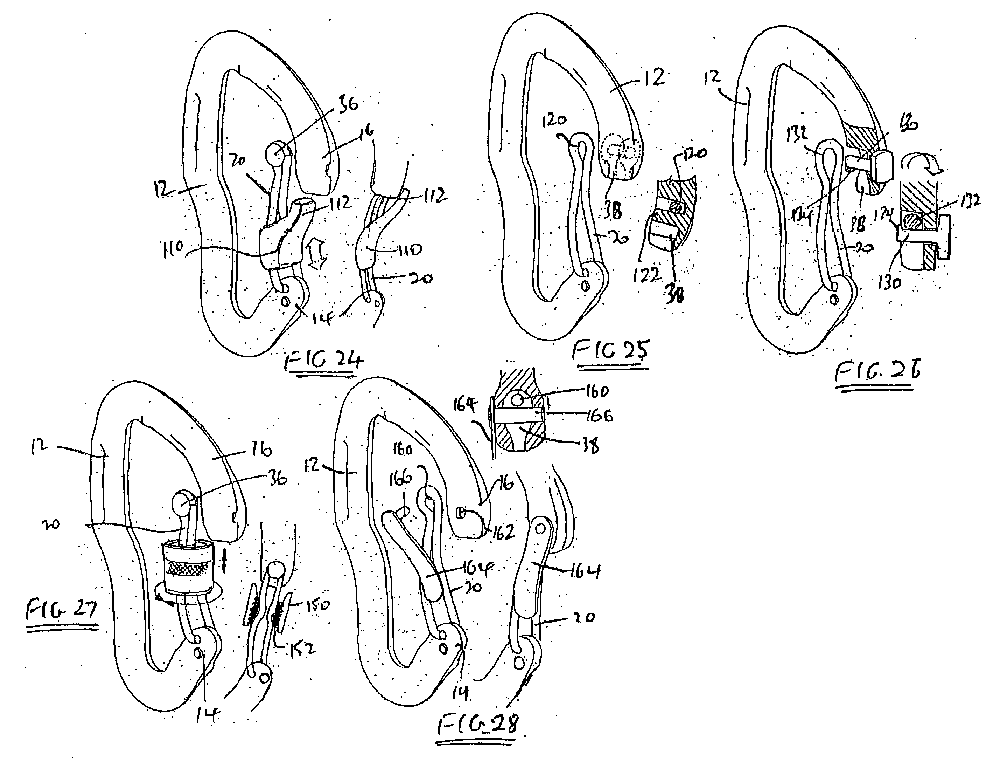

Referring to Figures 1 to 17 of the accompanying drawings, a karabiner 10 comprises a generally C-shaped body 12 having its free ends 14, 16 generally facing each other but leaving a gap 18 therebetween. Pivotally mounted on one free end 14 of the body is a gate 20. The body 12 of the karabiner where it curves top and bottom is shaped to provide locations for ropes or the like. At its top as shown there is a slight recess 21 and at the bottom the body is curved upwards at a more acute angle than at the top to provide a relatively confined location for a rope or the like.

The gate 20 is formed of wire basically bent double. The wire is bent double to form two strands 22, 24 with a loop 26 between them. The two strands 22, 24 overlie each other for a first part from the loop, so that in the karabiner they are in the plane of the body. From the end of the first part, the two strands diverge to opposite sides of the body before bending inwards to form ends 28, 30 that each locate in separate holes 32, 34 one above the other in the free end 14 of the karabiner body. The shaping of the gate and the offsetting of its pivot points urge the gate to a closed position as shown in Figures 1 to 6 of the drawings. Once pressure is applied to the gate inwardly, it will open but always spring back to a closed position when the pressure is removed. Thus, a rope or the like can be pushed into the karabiner through the gate which then snaps back to close the karabiner and retains the rope or the like therein.

The free end of the gate has located in the loop 26 a nut 36 and the free end 16 of the karabiner body has a shaped slot 38, which receives the nut 36 when the gate is closed. The slot 38 is shown in more detail in Figures 13 to 17. The slot 38 has a first narrow part 40 open to the end of the free end 16 of the body and leading to a wide part 42 forming ledges 44 on opposite sides of the slot. The ledges are generally normal to a longitudinal axis of the gate in its closed position. The narrow part 40 accommodates the overlying strands of the gate and the wide part of the nut 36.

When loads are applied to opposite ends of the karabiner body, the effect is to elongate the body and draw the free ends 14, 16 inwards. That has the effect of changing the angle of the ledges 44 with respect to the longitudinal axis of the gate to the extent that the ledges slope upwardly in the direction of opening of the gate rendering it more difficult for the gate to be opened inadvertently in a load situation. This is an important safety feature of the illustrated karabiner.

Furthermore, as can be seen, the free end 16 of the karabiner has a generally smooth profile, which advantageously can avoid the risk of snagging of ropes etc thereon.

Figures 18 to 28 show variations on the basic karabiner of Figures 1 to 17 and only the differences will be described in detail below. Like parts have been given the same reference numbers throughout for ease of understanding.

In Figure 18 instead of a generally circular nut, nut 60 at the end of the gate 20 is generally semi-circular in side view. In Figure 19, the karabiner has a rectangular nut 64 at the end of the gate 20.

In Figure 20 of the drawings, the end 74 of the gate 20 is folded over sideways instead of using a nut and the slot 38 in the free end of the body is shaped to correspond to the shape of the end of the gate.

Figure 21 of the drawings is included to show a karabiner with a safety lock in the form of rotatable thimble 90 on the free end of the body. The thimble 90 has a slot 92 therein that when aligned inwardly with the gate allows the gate to be opened and to close but when rotated out of that alignment locks the gate closed.

In Figure 22 the gate of the karabiner has a nut 100 that is slid onto the gate. Figure 23 shows how the nut 36 used in the karabiner of Figure 1 may be formed in two parts, one male 102 and the other 104 female.

Turning to Figure 24 of the drawings, a karabiner of the type of Figure 1 has a sliding locking member 110 on the gate, so that when the gate is closed, the locking member 110 can be slid up towards the free end 16 of the body. The locking member has a finger 112 that then overlies the body on the opposite side to the slot, so that the gate cannot be opened inadvertently.

Figure 25 of the drawings shows how the slot 38 may be shaped to correspond to the shape of the gate end. In this case, the gate end is in the form of a transverse loop 120 and the slot has a peg 122 therein, over which the loop locates.

In Figure 26, the slot 38at the free end of the body of the karabiner has a rotatable locking pin 130 through the end of the body. The gate has a loop 132 at its free end that locates over the pin. The pin has a lip 134, so that with the lip downwards as illustrated the loop 132 can locate on the pin but when the pin is rotated through 180°, the lip 134 prevents the loop 132 from being freed.

Figure 27 shows a locking thimble 150 provided on the gate. There is an outwardly screw-threaded sleeve 152 on the gate and the thimble is correspondingly threaded, so as to move upwards or downwards when rotated. When the thimble is moved upwards, it partly overlies the free end of the body, so that the gate cannot be opened.

Finally in Figure 28 of the drawings, a karabiner has a gate 20 with a loop 160 at its free end and there is a hole 162 through the free end 16 of the body in the region of the gate receiving slot 38, so that when the gate is closed the loop 160 and hole 162 coincide. A strap 164 attached to the gate has a pin 166 that can be pushed or sprung into the hole 162 and through the loop 160 to lock the gate closed.

## Claims

1. A karabiner (10) comprising a generally C-shaped body (12) with its free ends (14,16) curved towards each other and forming a gap (18) therebetween, a gate (20) for closing the gap pivotally located on a first free end (14) of the body, the gate being formed of a wire member and having a shaped end (20) located at the free end thereof, the second free end (16) of the body having a slot (38) therein for receiving the shaped free end of the gate, **characterised in that** the slot comprises from the second free end a first narrow part (40) for receiving the wire member leading to a second wider part (42) for receiving the shaped end of the gate.

2. A karabiner (10) as claimed in claim 1, wherein the gate (20) is formed by a wire that is bent double, the free ends (28,30) thereof being bent towards one another and each one being located in a corresponding hole (32,34) provided at the first free end (14) of the karabiner body (12), the holes being formed on opposite sides of the first free end (14), one hole being offset relative to the other in the direction of the gap (18).

3. A karabiner (10) as claimed in claim 2, wherein from their locations (32,34) in the first free end (14) of the body (12), the two strands of the wire (22,24) are bent towards each other to approximately a mid-point of the gate until they overlap in a plane of the body.

4. A karabiner (10) as claimed in claim 1, 2 or 3, wherein at its free end the gate (20) is shaped by folding or bending of the wire to form a shaped end (26).

5. A karabiner (10) as claimed in claim 4, wherein the shaped end of the gate (20) is bent over sideways from the plane of the body (12).

6. A karabiner (10) as claimed in claim 4, wherein the shaped end (26) of the gate (20) comprises a loop at the end of the gate that is enlarged.

7. A karabiner (10) as claimed in claim 2 or 3, wherein the shaped end of the gate (20) comprises a loop (26) at the free end of the gate formed where the wire is bent double, which loop captures a shaped nut (36) that can locate in the slot (38) of the second free end (16) of the body (12).

8. A karabiner (10) as claimed in claim 1, 2 or 3, wherein a shaped nut (100) is slid onto the gate (20).

9. A karabiner (10) as claimed in any of claims 1 to 8, wherein a ledge (44) is provided between the wide and narrow parts of the slot (42,40 respectively).

10. A karabiner (10) as claimed in claim 9, wherein the ledge (44) is in a plane substantially normal to a longitudinal axis of the gate (20) when the gate closes the gap (18).

11. A karabiner (10) as claimed in any one of claims 1 to 10, wherein the gate (20) or the second free end (16) of the body having the slot carry additional locking means (150 or 90 respectively) for when the gate closes the gap.

12. A karabiner (10) as claimed in claim 11, wherein a thimble (150) is provided on the gate that can be moved up the gate (20) to overlap at least partially the second free end (16) of the body having the slot (38).

13. A karabiner (10) as claimed in claim 12, wherein an outwardly screw threaded sleeve (152) is provided on the gate (20) and a corresponding internal screw thread in the thimble (150) that threadedly engages the threaded sleeve is provided on the sleeve.

14. A karabiner (10) as claimed in claim 11, wherein a locking ring (90) is mounted rotatably on the second free end (16) of the body (12) having the slot (38), the ring having a slot (92) therein, whereby in one position the gate (20) can pass through the slot of the ring for its shaped end to locate in the slot of the second free end of the body and then by rotating the ring, the slot therein is no longer accessible to the gate.

15. A karabiner (10) as claimed in claim 11, wherein the gate is provided with a slidable locking member (110).

16. A karabiner (10) as claimed in claim 15, wherein the locking member (110) is slidable towards the free end of the gate (20), when the gate closes the gap, the locking member having a finger (112) that extends, when the gate closes the gap, over the opposite side of the body to that of the slot opening to prevent the gate being pushed open.

17. A karabiner (10) as claimed in claim 11 having a locking pin (166) that is insertable through the second free end (16) of the body having the slot (38) of the karabiner and into or through the free end (26) of the gate to prevent it being pushed open.

18. A karabiner (10) as claimed in claim 17, wherein the locking pin (166) is on a flexible or spring-biased tab (164) attached to the gate (20).

19. A karabiner (10) as claimed in claim 17, wherein the pin (130) is rotatably mounted in the slot (38) of the second free end (16) of the body (12) having the slot between a first position wherein a lip (134) on the end of the pin can pass through a loop (132) of the wire gate and a second position wherein the lip retains the loop of the gate in the slot.

20. A karabiner (10) as claimed in any one of claims 1 to 19, wherein the slot (38) of the second free end (16) of the body faces inwards towards the body (12) of the karabiner.

21. A karabiner as claimed in any one of claims 1 to 19, wherein the slot (38) is shaped with a part (122) that interengages with a loop (26) of the wire gate (20).

## Patentansprüche

1. Karabinerhaken (10), der aufweist: einen im Allgemeinen C-förmigen Körper (12), wobei seine freien Enden (14, 16) zueinander gebogen sind und einen Spalt (18) dazwischen bilden; und einen Verschluss (20) für das Verschließen des Spaltes, der drehbar an einem ersten freien Ende (14) des Körpers angeordnet ist, wobei der Verschluss aus einem Drahtelement gebildet wird und ein geformtes Ende (20) aufweist, das am freien Ende davon angeordnet ist, wobei das zweite freie Ende (16) des Körpers einen Schlitz (38) darin für das Aufnehmen des geformten freien Endes des Verschlusses aufweist, **dadurch gekennzeichnet, dass** der Schlitz vom zweiten freien Ende aus einen ersten schmalen Abschnitt (40) für das Aufnehmen des Drahtelementes aufweist, der zu einem zweiten breiteren Abschnitt (42) für das Aufnehmen des geformten Endes des Verschlusses führt.

2. Karabinerhaken (10) nach Anspruch 1, bei dem der Verschluss (20) mittels eines Drahtes gebildet wird, der doppelt gebogen ist, wobei die freien Enden (28, 30) davon zueinander gebogen sind, und ein jedes in einem entsprechenden Loch (32, 34) angeordnet wird, das am ersten freien Ende (14) des Karabinerhakenkörpers (12) vorhanden ist, wobei die Löcher auf entgegengesetzten Seiten des ersten freien Endes (14) gebildet werden, wobei ein Loch relativ zum anderen in der Richtung des Spaltes (18) versetzt ist.

3. Karabinerhaken (10) nach Anspruch 2, bei dem von ihren Stellen (32, 34) im ersten freien Ende (14) des Körpers (12) aus die zwei Stränge (22, 24) des Drahtes zueinander bis zu annähernd einer Mitte des Verschlusses gebogen werden, bis sie sich in einer Ebene des Körpers überdecken.

4. Karabinerhaken (10) nach Anspruch 1, 2 oder 3, bei dem an seinem freien Ende der Verschluss (20) durch Falten oder Biegen des Drahtes gebildet wird, um ein geformtes Ende (26) zu bilden.

5. Karabinerhaken (10) nach Anspruch 4, bei dem das geformte Ende des Verschlusses (20) seitwärts aus der Ebene des Körpers (12) umgebogen wird.

6. Karabinerhaken (10) nach Anspruch 4, bei dem das geformte Ende (26) des Verschlusses (20) eine Schlinge am Ende des Verschlusses aufweist, die vergrößert wird.

7. Karabinerhaken (10) nach Anspruch 2 oder 3, bei dem das geformte Ende des Verschlusses (20) eine Schlinge (26) am freien Ende des Verschlusses aufweist, die dort gebildet wird, wo der Draht doppelt gebogen wird, wobei die Schlinge eine Formmutter (36) erfasst, die im Schlitz (38) des zweiten freien Endes (16) des Körpers (12) angeordnet werden kann.

8. Karabinerhaken (10) nach Anspruch 1, 2 oder 3, bei dem eine Formmutter (100) auf den Verschluss (20) geschoben wird.

9. Karabinerhaken (10) nach einem der Ansprüche 1 bis 8, bei dem ein Absatz (44) zwischen dem breiten und dem schmalen Abschnitt des Schlitzes (42, 40 entsprechend) vorhanden ist.

10. Karabinerhaken (10) nach Anspruch 9, bei dem der Absatz (44) in einer Ebene im Wesentlichen senkrecht zu einer Längsachse des Verschlusses (20) ist, wenn der Verschluss den Spalt (18) verschließt.

11. Karabinerhaken (10) nach einem der Ansprüche 1 bis 10, bei dem der Verschluss (20) oder das zweite freie Ende (16) des Körpers, das den Schlitz aufweist, eine zusätzliche Sperreinrichtung (150 oder bzw. 90) dafür trägt, wenn der Verschluss den Spalt verschließt.

12. Karabinerhaken (10) nach Anspruch 11, bei dem eine Seilkausche (150) am Verschluss vorhanden ist, die nach oben am Verschluss (20) bewegt werden kann, um mindestens teilweise das zweite freie Ende (16) des Körpers mit dem Schlitz (38) zu überdecken.

13. Karabinerhaken (10) nach Anspruch 12, bei dem eine mit Außenschraubengewinde versehene Hülse (152) am Verschluss (20) und ein entsprechendes Innenschraubengewinde in der Seilkausche (150) vorhanden sind, das verschraubbar mit dem Gewinde in Eingriff kommt, das auf der Hülse vorhanden ist.

14. Karabinerhaken (10) nach Anspruch 11, bei dem ein Sperrring (90) drehbar an dem zweiten freien Ende (16) des Körpers (12) montiert ist, das den Schlitz (38) aufweist, wobei der Ring einen Schlitz (92) darin aufweist, wobei in einer Position der Verschluss (20) durch den Schlitz des Ringes hindurchgehen kann, damit sein geformtes Ende im Schlitz des zweiten freien Endes des Körpers angeordnet wird und danach durch Drehen des Ringes der Schlitz darin nicht länger für den Verschluss zugänglich ist.

15. Karabinerhaken (10) nach Anspruch 11, bei dem der Verschluss mit einem verschiebbaren Sperrelement (110) versehen ist.

16. Karabinerhaken (10) nach Anspruch 15, bei dem das Sperrelement (110) zum freien Ende des Verschlusses (20) verschiebbar ist, wenn der Verschluss den Spalt verschließt, wobei das Sperrelement einen Finger (112) aufweist, der sich, wenn der Verschluss den Spalt verschließt, über die entgegengesetzte Seite des Körpers zu der Schlitzöffnung erstreckt, um zu verhindern, dass der Verschluss aufgedrückt wird.

17. Karabinerhaken (10) nach Anspruch 11, der einen Sperrstift (166) aufweist, der durch das zweite freie Ende (16) des Körpers, das den Schlitz (38) des Karabinerhakens aufweist, und in oder durch das freie Ende (26) des Verschlusses eingesetzt werden kann, um zu verhindern, dass er aufgedrückt wird.

18. Karabinerhaken (10) nach Anspruch 17, bei dem der Sperrstift (166) auf einem elastischen oder federbelasteten Vorsprung (164) ist, der am Verschluss (20) befestigt ist.

19. Karabinerhaken (10) nach Anspruch 17, bei dem der Stift (130) drehbar im Schlitz (38) des zweiten freien Endes (16) des Körpers (12), der den Schlitz aufweist, zwischen einer ersten Position, bei der ein Rand (134) am Ende des Stiftes durch eine Schlinge (132) des Drahtverschlusses hindurchgehen kann, und einer zweiten Position montiert ist, bei der der Rand die Schlinge des Verschlusses im Schlitz hält.

20. Karabinerhaken (10) nach einem der Ansprüche 1 bis 19, bei dem der Schlitz (3 8) des freien Endes (16) des Körpers nach innen zum Körper (12) des Karabinerhakens hin liegt.

21. Karabinerhaken (10) nach einem der Ansprüche 1 bis 19, bei dem der Schlitz (38) mit einem Abschnitt (122) ausgebildet ist, der mit einer Schlinge (26) des Drahtverschlusses (20) in Eingriff kommt.

## Revendications

1. Mousqueton (10), comprenant un corps ayant en général une forme en C (12), ses extrémités libres (14, 16) étant courbées l'une vers l'autre et formant un espace (18) entre elles, une grille (20) pour fermer l'espace agencée par pivotement sur une première extrémité libre (14) du corps, la grille étant composée d'un élément métallique et comportant une extrémité profilée (20) agencée au niveau de l'extrémité libre correspondante, la deuxième extrémité libre (16) du corps comportant une fente (38) pour recevoir l'extrémité libre profilée de la grille, **caractérisé en ce que** la fente comrpend sur la deuxième extrémité libre une première partie étroite (40) destinée à recevoir l'élément métallique, menant vers une deuxième partie élargie (42) pour recevoir l'extrémité profilée de la grille.

2. Mousqueton (10) selon la revendication 1, dans lequel la grille (20) est formée par un fil métallique à double flexion, les extrémités libres correspondantes (28, 30) étant fléchies l'une vers l'autre et chacune étant agencée dans un trou correspondant (32, 34) agencé au niveau de la première extrémité libre (14) du corps du mousqueton (12), les trous étant formés sur les côtés opposés de la première extrémité libre (14), un trou étant décalé par rapport à l'autre dans la direction de l'espace (18).

3. Mousqueton (10) selon la revendication 2, dans lequel, à partir de leurs emplacements (32, 34) dans la première extrémité libre (14) du corps (12), les deux torons du fil métallique (22, 24) sont fléchis l'in vers l'autre jusqu'à un point pratiquement central sur la grille, jusqu'à chevaucher un plan du corps.

4. Mousqueton (10) selon les revendications 1, 2 ou 3, dans lequel l'espace (20) est formé au niveau de son extrémité libre par pliage ou fléchissement du fil métallique pour former une extrémité profilée (26).

5. Mousqueton (10) selon la revendication 4, dans lequel l'extrémité profilée de la grille (20) est fléchie latéralement par rapport an plan du corps (12).

6. Mousqueton (10) selon la revendication 4, dans lequel l'extrémité profilée (26) de la grille (20) comprend une boucle au niveau de l'extrémité élargie de la grille.

7. Mousqueton (10) selon la revendication 4, dans lequel l'extrémité profilée (26) de la grille (20) comprend une boucle (26) au niveau de l'extrémité libre de la grille, formée au niveau du point de la double flexion du fil métallique, cette boucle retenant un écrou profilé (36) pouvant être positionné dans la fente (36) de la deuxième extrémité libre (16) du corps (12).

8. Mousqueton (10) selon les revendications 1, 2 ou 3, dans lequel un écrou profilé (100) est glissé sur la grille (20).

9. Mousqueton (10) selon l'une quelconque des revendications 1 à 8, dans lequel une moulure (44) est respectivement agencée entre les parties large et étroite de la fente (42, 40).

10. Mousqueton (10) selon la revendication 9, dans lequel la moulure (44) se situe dans un plan pratiquement perpendiculaire à un axe longitudinal de la grille (20) lorsque la grille ferme l'espace (18).

11. Mousqueton (10) selon l'une quelconque des revendications 1 à 10, dans lequel la grille (20) ou la deuxième extrémité libre (16) du corps comportant la fente supporte des moyens de verrouillage additionnels (respectivement 150 ou 90) pour le cas où la grille ferme l'espace.

12. Mousqueton (10) selon la revendication 11, dans lequel une cosse (150) est agencée sur la grille, pouvant être déplacée le long de la grille (20) pour chevaucher au moins partiellement la deuxième extrémité libre (16) du corps comportant la fente (38).

13. Mousqueton (10) selon la revendication 12, dans lequel un manchon à filetage à vis externe (152) est agencé sur la grille (20), un filetage à vis intérieur correspondant dans la cosse (150) s'engageant par filetage dans le filetage agencé sur le manchon.

14. Mousqueton (10) selon la revendication 11, dans lequel une bague de verrouillage (90) est montée par rotation sur la deuxième extrémité libre (16) du corps (12) comportant la fente (38), la bague comportant une fente (92), la grille (20) pouvant passer dans une position à travers la fente de la bague pour positionner son extrémité profilée dans la fente de la deuxième extrémité libre du corps, la fente correspondante n'étant plus accessible par la grille par suite de la rotation de la bague.

15. Mousqueton (10) selon la revendication 11, dans lequel la grille comporte un élément de verrouillage à glissement (110).

16. Mousqueton (10) selon la revendication 15 dans lequel l'élément de verrouillage (110) peut glisser vers l'extrémité libre de la grille (20) lorsque la grille ferme l'espace, l'élément de verrouillage comportant un doigt (112) s'étendant au-dessus du côté du corps opposé à celui de l'ouverture de la fente lorsque la grille ferme l'espace, de sorte à empêcher une ouverture par poussée de la grille.

17. Mousqueton (10) selon la revendication 11, comportant une goupille de verrouillage (166) pouvant être insérée à travers la deuxième extrémité libre (16) du corps comportant la fente (38) du mousqueton et dans ou à travers l'extrémité libre (26) de l'espace pour empêcher son ouverture par poussée.

18. Mousqueton (10). selon la revendication 17, dans lequel la goupille de verrouillage (166) est agencée sur une patte flexible ou sollicitée par ressort (164) fixée sur la grille (20).

19. Mousqueton (10) selon la revendication 17, dans lequel la goupille (130) est montée par rotation dans la fente (38) de la deuxième extrémité libre (16) du corps (12) comportant la fente, entre une première position, dans laquelle un rebord (134) sur l'extrémité de la goupille peut traverser une boucle (132) de la grille métallique, et une deuxième position dans laquelle le rebord retient la boucle de la grille dans la fente.

20. Mousqueton (10) selon l'une quelconque des revendications 1 à 19, dans lequel la fente (38) de la deuxième extrémité libre (16) du corps et orientée vers l'intérieur, en direction du corps (12) du mousqueton.

21. Mousqueton (10) selon l'une quelconque des revendications 1 à 19, dans lequel la fente (38) comporte une partie (122) s'engageant dans une boucle (26) de la grille métallique (20).
